# EUROPÄISCHE PATENTSCHRIFT

(11) **EP 1 872 740 B1**
(45) Veröffentlichungstag und Bekanntmachung des Hinweises auf die Patenterteilung: **05.10.2011**
(21) Anmeldenummer: 06405265.7
(22) Anmeldetag: 21.06.2006
(51) Int. Cl.: A61C 13/267

(54) **Anordnung zur Befestigung einer Zahnprothese an einer Stegpatrize**
Assembly for fixing a dental prosthesis to a bar-shaped male part
Agencement pour la fixation d'une prothèse dentaire à une barre mâle

(43) Veröffentlichungstag der Anmeldung: 02.01.2008
(73) Patentinhaber: Cendres + Métaux SA, 2504 Biel (CH)
(72) Erfinder: Auderset, Adrian, 2560 Nidau (CH); Strazza, Mathias, 2560 Nidau (CH); Studer, Jean-Fred, 2516 Lamboing (CH); Messerli, Hans, 2504 Biel (CH)
(74) Vertreter: AMMANN PATENTANWÄLTE AG BERN

(56) Entgegenhaltungen:
- DE-A1- 2 945 489
- US-A- 1 367 885

## Beschreibung

Die vorliegende Erfindung bezieht sich auf eine Anordnung zur Befestigung einer Zahnprothese an einer Stegpatrize, mit einem Matrizengehäuse welches mit der Zahnprothese verbindbar ist.

Eine derartige Anordnung ist aus der DE 29 45 489 A1 bekannt. Zum kraftschlüssigen Verbinden des Matrizengehäuses mit der Stegpatrize ist ein gummielastisches Material vorgesehen, welches in zwei Längsnuten des Matrizengehäuses eingebettet ist. Form und Grösse des gummielastischen Materials sind fest vorgegeben. Muss das Matrizengehäuse beim Anbringen in der Zahnprothese aufgrund der geometrischen Gegebenheiten gekürzt werden, so verändert sich die Haltekraft, mit welcher das Matrizengehäuse an der Stegpatrize gehalten ist. Bei dieser Anordnung ist es nicht vorgesehen, diese Haltekraft einzustellen zu können.

Aus der EP 473 933 A1 ist eine Verbindung mit einer Stegpatrize bekannt, auf welche ein elastisches Federteil aufgesetzt wird. Auch hier sind Form und Grösse des Federteils fest vorgegeben, sodass ein nachträgliches Einstellen der Haltekraft nicht möglich ist.

Auf dem Markt sind auch Anordnungen erhältlich, welche für den Modellguss gedacht sind und eine Auswahl an diversen Kunststoffeinsätzen umfassen, die mit einer unterschiedlichen Reibung auf die Stegpatrize wirken. Beim Guss ist eine Aussparung für den Kunststoffeinsatz vorgesehen, der später in das gegossene Prothesengerüst eingesetzt werden soll. Diese Anordnungen haben den Nachteil, dass der Guss jeweils individuell erzeugt werden muss und daher die Herstellung relativ aufwändig und teuer ist. Im Weiteren definiert der eingesetzte Kunststoffeinsatz die Haltekraft. Soll diese geändert werden, muss der Kunststoffeinsatz durch einen anderen ersetzt werden. Ein nachträgliches Einstellen der Haltekraft ist daher nur in beschränktem Masse möglich.

Ausgehend von diesem Stand der Technik liegt eine Aufgabe der vorliegenden Erfindung darin, eine Anordnung der eingangs erwähnten Art anzugeben, welche in vereinfachtem Masse das Einstellen der Haltekraft erlaubt, mit welcher das Matrizengehäuse an der Stegpatrize gehalten ist.

Eine Anordnung, die diese Aufgabe löst, ist im Anspruch 1 angegeben. Die weiteren Ansprüche geben bevorzugte Ausführungen an.

Gemäss Anspruch 1 sind mindestens zwei Einsätze vorgesehen, welche in das Matrizengehäuse einsetzbar sind. Dies erlaubt es auf einfache Weise die Haltekraft einzustellen, indem wahlweise eine Anzahl der Einsätze in das Matrizengehäuse eingesetzt wird.

Die Erfindung wird im Folgenden anhand von Ausführungsbeispielen unter Bezugnahme auf Figuren erläutert. Es zeigen
Fig. 1 ein erstes Ausführungsbeispiel eines Matrizengehäuses einer erfindungsgemässen Anordnung in einer perspektivischen Ansicht von oben;
Fig. 2 das Matrizengehäuse gemäss Fig. 1 in einer perspektivischen Ansicht von unten;
Fig. 3 das Matrizengehäuse gemäss Fig. 1 in einer Draufsicht;
Fig. 4 das Matrizengehäuse gemäss Fig. 1 in einer geschnittenen Seitenansicht gemäss der Linie IV-IV in Fig. 5;
Fig. 5 das Matrizengehäuse gemäss Fig. 1 in einer Unteransicht;
Fig. 6 ein erstes Ausführungsbeispiel eines Einsatzes einer erfindungsgemässen Anordnung in einer Vorderansicht;
Fig. 7 den Einsatz gemäss Fig. 6 in einer Seitenansicht;
Fig. 8 den Einsatz gemäss Fig. 6 in einer Draufsicht;
Fig. 9 den Einsatz gemäss Fig. 6 in einer perspektivischen Ansicht;
Fig. 10 das Matrizengehäuse gemäss Fig. 1 in einer Vorderansicht;
Fig. 11 eine perspektivische Ansicht einer Stegpatrize zur Aufnahme des Matrizengehäuses gemäss Fig. 1 mit Einsätzen gemäss Fig. 6;
Fig. 12 das Matrizengehäuse gemäss Fig. 1 mit vier eingesetzten Einsätzen gemäss Fig. 6 in einer perspektivischen Ansicht von unten;
Fig. 13 die Anordnung gemäss Fig. 12 in einer geschnittenen Seitenansicht gemäss der Linie XIII-XIII in Fig. 14, wobei die Stegpatrize nicht gezeigt ist;
Fig. 14 eine Vorderansicht der Anordnung gemäss Fig. 12 aufgesetzt auf einer Stegpatrize gemäss Fig. 11;
Fig. 15 das Matrizengehäuse gemäss Fig. 1 mit einem eingesetzten Einsatz gemäss Fig. 6 in einer perspektivischen Ansicht von unten;
Fig. 16 das Matrizengehäuse gemäss Fig. 1 mit zwei eingesetzten Einsätzen gemäss Fig. 6 in einer perspektivischen Ansicht von unten;
Fig. 17 das Matrizengehäuse gemäss Fig. 1 zusammen mit einer Trennscheibe in einer perspektivischen Ansicht;
Fig. 18 das Basisgehäuse des Matrizengehäuses gemäss Fig. 1 in einer perspektivischen Ansicht von oben;
Fig. 19 das Basisgehäuse gemäss Fig. 18 in einer perspektivischen Ansicht von unten;
Fig. 20 ein zweites Ausführungsbeispiel eines Matrizengehäuses einer erfindungsgemässen Anordnung in einer perspektivischen Ansicht von oben;
Fig. 21 das Matrizengehäuse gemäss Fig. 20 in einer perspektivischen Ansicht von unten;
Fig. 22 das Matrizengehäuse gemäss Fig. 20 in einer Draufsicht;
Fig. 23 das Matrizengehäuse gemäss Fig. 20 in einer geschnittenen Seitenansicht gemäss der Linie XXIII-XXXIII in Fig. 24;
Fig. 24 das Matrizengehäuse gemäss Fig. 20 in einer Unteransicht;
Fig. 25 ein zweites Ausführungsbeispiel eines Einsatzes einer erfindungsgemässen Anordnung in einer Vorderansicht;
Fig. 26 den Einsatz gemäss Fig. 25 in einer Seitenansicht;
Fig. 27 den Einsatz gemäss Fig. 25 in einer Draufsicht;
Fig. 28 den Einsatz gemäss Fig. 25 in einer perspektivischen Ansicht;
Fig. 29 eine perspektivische Ansicht einer Stegpatrize zur Aufnahme des Matrizengehäuses gemäss Fig. 20 mit Einsätzen gemäss Fig. 25;
Fig. 30 das Matrizengehäuse gemäss Fig. 20 in einer Vorderansicht;
Fig. 31 das Matrizengehäuse gemäss Fig. 20 mit eingesetzten Einsätzen gemäss Fig. 25 in einer perspektivischen Ansicht von oben;
Fig. 32 eine Vorderansicht der Anordnung gemäss Fig. 31 aufgesetzt auf einer Stegpatrize gemäss Fig. 29;
Fig. 33 die Anordnung gemäss Fig. 31 in einer geschnittenen Seitenansicht gemäss der Linie XXXIII-XXXIII in Fig. 32, wobei die Stegpatrize nicht gezeigt ist;
Fig. 34 das Basisgehäuse des Matrizengehäuses gemäss Fig. 20 in einer perspektivischen Ansicht von unten;
Fig. 35 das Basisgehäuse gemäss Fig. 34 in einer perspektivischen Ansicht von oben;
Fig. 36 ein drittes Ausführungsbeispiel eines Matrizengehäuses einer erfindungsgemässen Anordnung in einer geschnittenen Seitenansicht gemäss der Linie XXXVI-XXXVI in Fig. 37;
Fig. 37 das Matrizengehäuse gemäss Fig. 36 in einer Unteransicht;
Fig. 38 das Matrizengehäuse gemäss Fig. 36 in einer perspektivischen Ansicht von unten;
Fig. 39 ein drittes Ausführungsbeispiel eines Einsatzes einer erfindungsgemässen Anordnung in einer Vorderansicht;
Fig. 40 den Einsatz gemäss Fig. 39 in einer Seitenansicht;
Fig. 41 den Einsatz gemäss Fig. 39 in einer Draufsicht;
Fig. 42 den Einsatz gemäss Fig. 39 in einer perspektivischen Ansicht;
Fig. 43 das Matrizengehäuse gemäss Fig. 36 mit zwei eingesetzten Einsätzen gemäss Fig. 39 in einer perspektivischen Ansicht von unten;
Fig. 44 eine geschnittene Vorderansicht der Anordnung gemäss Fig. 43;
Fig. 45 zeigt ein viertes Ausführungsbeispiel eines Matrizengehäuses einer erfindungsgemässen Anordnung in einer Vorderansicht;
Fig. 46 ein viertes Ausführungsbeispiel eines Einsatzes einer erfindungsgemässen Anordnung in einer Vorderansicht;
Fig. 47 den Einsatz gemäss Fig. 46 in einer Seitenansicht;
Fig. 48 den Einsatz gemäss Fig. 46 in einer Unteransicht;
Fig. 49 den Einsatz gemäss Fig. 46 in einer perspektivischen Ansicht von unten;
Fig. 50 den Einsatz gemäss Fig. 46 in einer perspektivischen Ansicht von oben;
Fig. 51 das Matrizengehäuse gemäss Fig. 45 mit vier eingesetzten Einsätzen gemäss Fig. 46 in einer Unteransicht;
Fig. 52 eine Vorderansicht der Anordnung gemäss Fig. 51;
Fig. 53 eine Seitenansicht der Anordnung gemäss Fig. 51 geschnitten gemäss der Linie LIII-LIII in Fig. 52; und
Fig. 54 eine perspektivischen Ansicht der Anordnung gemäss Fig. 51 von unten.

### Erstes Ausführungsbeispiel

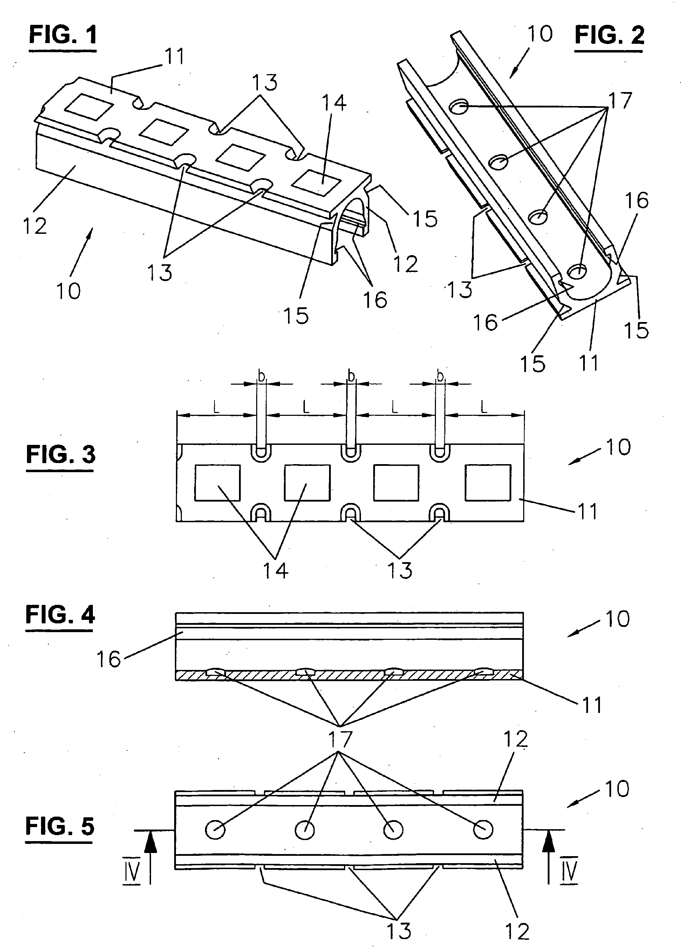

Fig. 1 - 5 zeigen verschiedene Ansichten des Matrizengehäuses 10, welches an einer Zahnprothese z.B. mittels eines Polymerisats fixierbar und auf einer Patrize in Form eines Steges anbringbar ist.

Das Matrizengehäuse 10 enthält ein Basisgehäuse mit einer vorgegebenen Länge L, welche z.B. kleiner als 10 mm oder kleiner als 5 mm ist und z.B. 3.5 mm beträgt. Das Matrizengehäuse 10 umfasst eine Anzahl aneinandergereihter Basisgehäuse und bildet so einen geraden, einteiligen Stegreiter. Die Gesamtlänge des Matrizengehäuses 10 ist anpassbar, indem ein Stück z.B. mittels einer Trennscheibe abgetrennt wird.

Das Matrizengehäuse 10 bzw. Basisgehäuse umfasst eine Deckplatte 11, welche mit zwei Seitenwänden 12 versehen ist. Die beiden Seitenwänden 12 sind im Wesentlichen spiegelsymmetrisch zueinander ausgebildet.

Die Deckplatte 11 ist in regelmässigen Abständen mit Kennzeichnungen in Form von Einschnitten 13 versehen, welche an den beiden Längskanten der Deckplatte 11 angebracht sind. Die Einschnitte 13 definieren die möglichen Positionen, wo das Matrizengehäuse 10 gekürzt werden kann, und sind so geformt, dass sie beim Kürzen des Matrizengehäuses 10 eine Führung für die Trennscheibe bieten. Jeder Einschnitt 13 hat eine Breite b, die so gewählt ist, dass sie den beim Kürzen des Matrizengehäuses 10 entstehenden Verschnitt mitberücksichtigt. Die Breite b entspricht z.B. der Dicke der Trennscheibe. Die Gesamtlänge des Matrizengehäuses 10 ist somit gegeben durch N*L + (N-1)*b, wobei N die Anzahl der Basisgehäuse ist (vgl. Fig. 3). Wie insbesondere Fig. 1 und 3 zeigen, sind die Einschnitte 13 durch einen Rand begrenzt, der sich von der Oberseite der Deckplatte 11 zu deren Unterseite hin verjüngt.

Anstelle der Einschnitte 13 oder zusätzlich zu diesen können die einzelnen Basisgehäuse auch durch Nuten gekennzeichnet sein.

Optional können Gravuren 14 vorgesehen sein, die in im Wesentlichen regelmässigen Abständen am Matrizengehäuse 10, z.B. auf der Aussenseite und/oder Innenseite der Deckplatte 11 angebracht sind. In den Fig. 1 und 3 sind die Gravuren 14 lediglich durch Rechtecke angedeutet. Sie können beliebig ausgebildet sein, beispielsweise als Logo, Symbole, Schriften, etc. und sind durch gängige Verfahren, insbesondere auch Gravieren mittels Fräsen oder Laser, angebracht. Die Gravuren 14 dienen als Träger für bestimmte Informationen, z.B. solche über die Herkunft des Produktes und/oder deren Bezeichnung.

Der Bereich, wo die jeweilige Seitenwand 12 in die Deckplatte 11 übergeht, ist mit einer Haltenut 15 versehen. Die Längskanten der Deckplatte 11 stehen somit etwas von den Seitenwänden 12 ab, wodurch gewährleistet ist, dass das Matrizengehäuse 10 nach dem Einbetten in der Zahnprothese sicher gehalten ist.

Die Innenseite der jeweiligen Seitenwand 12 ist mit einer Längsnut 16 versehen. Jedes Basisgehäuse weist in der Innenseite der Deckplatte 11 eine Vertiefung 17 auf.

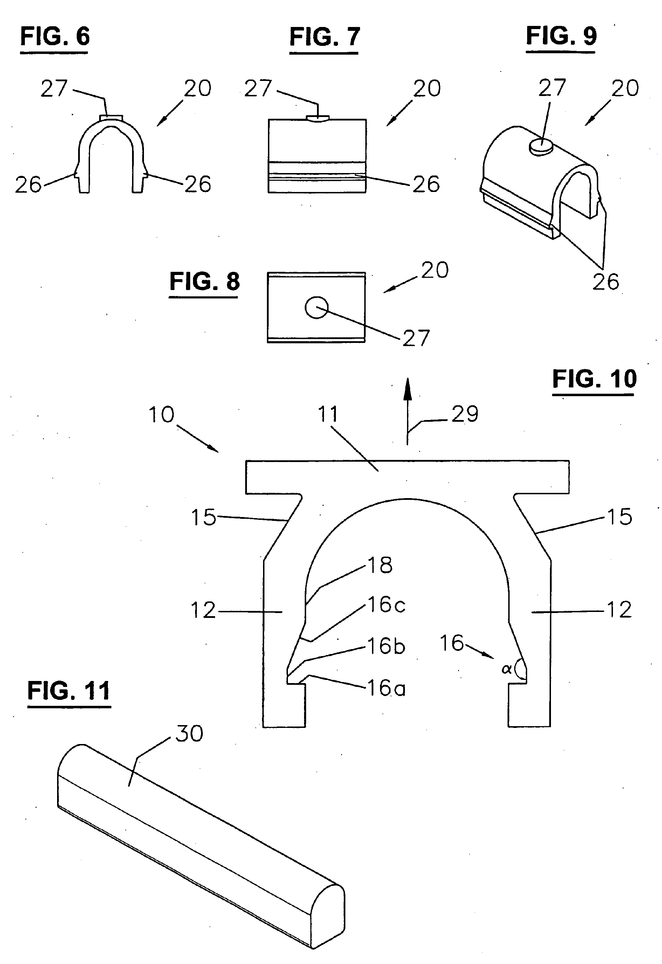

Jedes Basisgehäuse des Matrizengehäuses 10 bildet einen Platz, in welchem ein Einsatz 20 aufnehmbar ist. Fig. 6 - 9 zeigen verschiedene Darstellungen eines derartigen Einsatzes 20.

Wie insbesondere Fig. 6 zeigt, weist der Einsatz 20 einen im Wesentlichen U-förmigen Querschnitt auf. Die Aussenfläche des Einsatzes 20 ist im Wesentlichen komplementär zur Innenfläche des Basisgehäuses ausgebildet. Insbesondere ist die jeweilige Aussenseite des Einsatzes 20 abgestuft ausgebildet, sodass ein Längsflügel 26 geformt ist. Auf der okklusalen Seite des Einsatzes 20 befindet sich ein Vorsprung in Form eines Noppens 27. Wird der Einsatz 20 in eines der Basisgehäuse eingesetzt, so greifen die Längsflügel 26 in die Längsnuten 16 des Matrizengehäuses 10 und der Noppen 27 greift in die Vertiefung 17.

Die Form der Längsnuten 16 und der Längsflügel 26 sind so gewählt, dass der Einsatz 20 sicher im Matrizengehäuse 10 gehalten ist, insbesondere dann, wenn die Matrize bzw. die Zahnprothese von der Stegpatrize in Abzugsrichtung abgezogen wird.

In Fig. 10, welche eine Vorderansicht des Matrizengehäuses 10 in einer stark vergrösserten Darstellung zeigt, ist die Abzugsrichtung durch den Pfeil 29 dargestellt. Der Querschnitt der jeweiligen Längsnut 16 weist einen ersten Abschnitt 16a auf, der im Wesentlichen senkrecht zur Abzugsrichtung 29 angeordnet ist und an einen zweiten Abschnitt 16b angrenzt. Dieser ist näher zur Deckplatte 11, d.h. okklusalen Seite des Matrizengehäuses 10 angeordnet als der erste Abschnitt 16a. Der zweite Abschnitt 16b ist im Wesentlichen parallel zur Abzugsrichtung 29 angeordnet und grenzt an einen dritten Abschnitt 16c der Längsnut 16 an. Der Winkel α zwischen dem zweiten, 16b, und dritten Abschnitt 16c ist grösser als 90 Grad und kleiner als 180 Grad. Der Winkel α ist vorzugsweise im Bereich von 125 Grad bis 170 Grad. Der dritte Abschnitt 16c grenzt an einen vierten Abschnitt 18 an, welcher in die U-Form der Innenfläche des Matrizengehäuses 10 übergeht. Die Abschnitte 16a, 16b und 16c sind im Wesentlichen gerade.

Die Seitenwand 12 hat ihre schmalste Stelle im Bereich des zweiten Abschnitts 16b. Der Abstand zwischen diesem Abschnitt 16b und dem basalen Ende des Matrizengehäuses 10 ist möglichst gering gewählt, sodass bei einer Belastung des Matrizengehäuses 10 ein möglichst kurzer Hebelarm auf die schmalste Stelle wirkt. Im Weiteren gewährleistet die gewählte Formgebung der Längsnut 16, dass die schmalste Stelle der Seitenwand 12 allmählich in die dickere Wandung beim vierten Abschnitt 18 übergeht und so in stabiler Weise mit dem Rest des Matrizengehäuses 10 verbunden ist. Versuche haben gezeigt, dass das Matrizengehäuse 10 auch grossen Belastungen standhalten vermag, ohne dass ein Bruch auftritt. Es hat sich ferner gezeigt, dass ein Matrizengehäuse mit Längsnuten, die einen rechteckigen oder halbrunden Querschnitt aufweisen, weniger belastbar sind und die Seitenwand abbrechen kann.

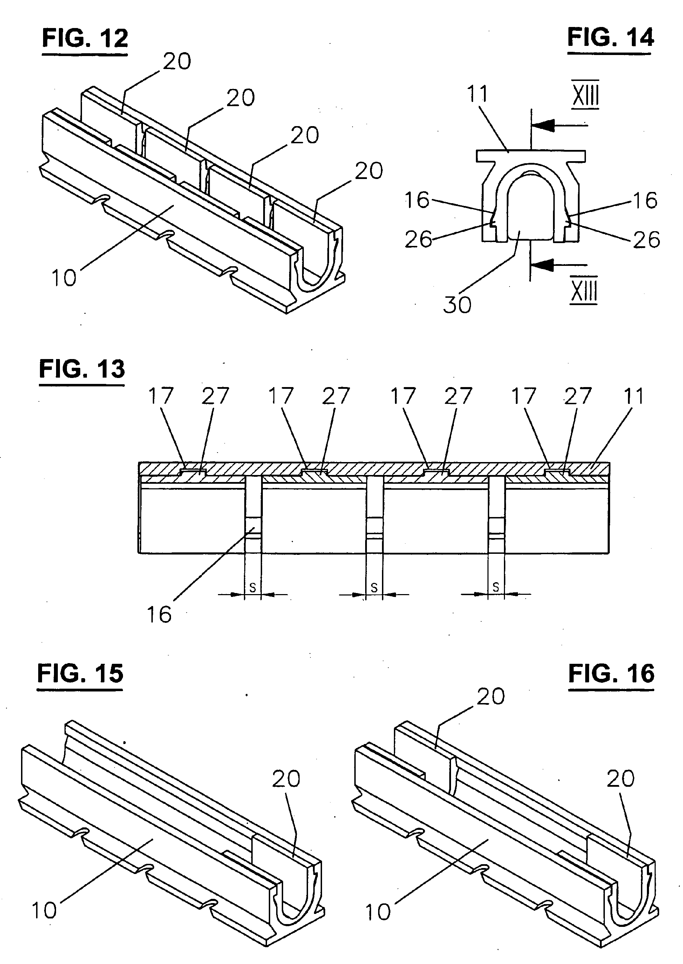

Fig. 11 zeigt die Stegpatrize 30, auf welche das Matrizengehäuse 10 zusammen mit den Einsätzen 20 aufsetzbar ist. Wie auch Fig. 14 zeigt, weist die Stegpatrize 30 einen U-förmigen Querschnitt auf, wobei die beiden Seitenflächen parallel zueinander angeordnet sind. Eine derartige Stegpatrize ist auch als Dolder-Steg bekannt. Matrizengehäuse 10 und Einsatz 20 sind so ausgebildet, dass sie auch bei bereits bestehenden Stegpatrizen einsetzbar sind.

Fig. 12 und 13 zeigen ein Matrizengehäuse 10 mit vier eingefügten Einsätzen 20. Der Vorsprung eines jeweiligen Einsatzes 20 greift in eine Vertiefung 17 des Basisgehäuses. Vorsprung 27 und Vertiefung 17 bilden somit Positionierungsmittel, welche die Position des jeweiligen Einsatzes 20 im Matrizengehäuse 10 vorgeben. Sind die Einsätze 20 im Matrizengehäuse 10 eingesetzt, so verhindern die Positionierungsmittel 17, 27, dass sich die Einsätze 20 entlang des Matrizengehäuses 10 verschieben können.

Wie Fig. 14 zeigt, ist der Einsatz 20 zwischen Matrizengehäuse 10 und Stegpatrize 30 angeordnet. Der Einsatz 20 ist auf der okklusalen Seite geschlossen, sodass er die Stegpatrize 30 umgreift.

Die Länge des Einsatzes 20 entspricht im Wesentlichen der Länge L des Basisgehäuses. Zwischen zwei Einsätzen 20, welche benachbart im Matrizengehäuse 10 eingefügt sind, ist somit ein Spalt s gegeben, der im Wesentlichen der Breite b entspricht.

Die Kraft, mit welcher das Matrizengehäuse 10 am Steg 30 gehalten ist, wird im Folgenden als Haltekraft bezeichnet. Die Kraft, welche erforderlich ist, um das Matrizengehäuse 10 vom Steg 30 zu lösen, wird als Abzugskraft bezeichnet. Abzugs- und Haltekraft sind betragsmässig gleich, jedoch entgegengesetzt gerichtet.

Bei dem hier dargestellten Beispiel wird das auf die Stegpatrize 30 aufgesetzte Matrizengehäuse 10 primär durch die Reibung gehalten, welche zwischen den Einsätzen 20 und der Stegpatrize 30 wirkt. Die Reibung und somit die Haltesowie Abzugskraft lassen sich auf einfache Weise einstellen, indem die Anzahl eingefügter Einsätze 20 sowie deren Position gewählt werden, in welcher sie eingefügt werden. Im Beispiel gemäss Fig. 15 ist nur ein Einsatz 20 im äussersten Basisgehäuse eingesetzt. Beim Beispiel gemäss Fig. 16 ist in den beiden äusseren Basisgehäusen je ein Einsatz 20 montiert.

Optional können verschiedenartige Einsätze 20 vorgesehen sein, die sich z.B. in ihrer Dicke unterscheiden, sodass sich weitere Möglichkeiten ergeben, um Halte- sowie Abzugskraft einstellen zu können.

Das Matrizengehäuse 10 sowie die Einsätze 20 sind vorfabriziert und bestehen aus einem mundbeständigem Material, beispielsweise einem geeigneten Metall wie Titan oder Kunststoff wie Polyetheretherketon (PEEK) oder Polyoxymethylen (POM).

Die Einsätze 20 sind elastisch ausgebildet, sodass sie in das Matrizengehäuse 10 eingesetzt werden können. Sie brauchen jedoch nicht unbedingt nur aus Kunststoff zu bestehen, sondern sie können auch ein Metallgerüst umfassen, welches mit Kunststoff ummantelt ist.

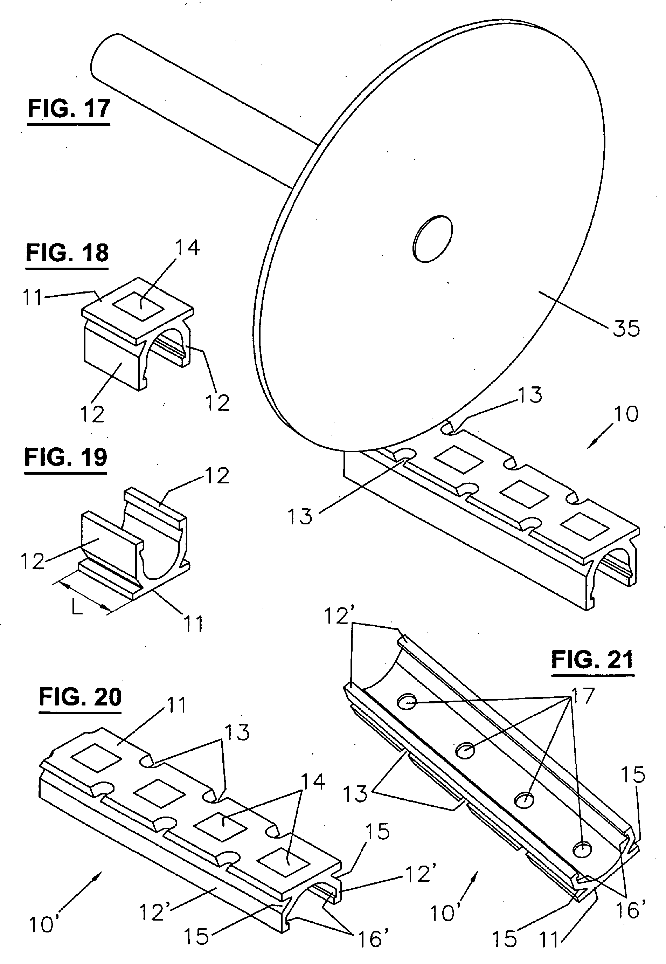

Das Matrizengehäuse 10 wird als lange Profilstange hergestellt, von welchem der Anwender ein Matrizengehäuse 10 der gewünschten Länge abtrennen kann. Dazu ist eine gängige Trennscheibe 35 geeignet, wie sie in Fig. 17 dargestellt ist. Die Einschnitte 13 führen dabei die Trennscheibe 35 beim Trennvorgang. Es ist denkbar, vorgängig je einen Einsatz 20 in die beiden Basisgehäuse einzusetzen, welche an die vorgesehene Trennlinie angrenzen. Die beiden Frontflächen der Einsätze 20 bilden dann zusätzlich Führungsflächen für die Trennscheibe 35. Es ist auch denkbar, zwei separate Hilfsteile vorzusehen, welche in die beiden Basisgehäuse eingesetzt werden. Die Hilfsteile haben die gleiche Aussenflächen wie der Einsatz 20, können jedoch aus einem anderen Material bestehen, z.B. einem härteren.

Weiter ist es denkbar, eine lange Profilstange herzustellen, welche die Aussenform des Einsatzes 20 hat und von welchem der Anwender einzelne Einsätze 20 abtrennen kann.

Nebst dem langen Matrizengehäuse 10 können auch Matrizengehäuse vorgesehen sein, welche als einzelne Basisgehäuse hergestellt sind, vgl. Fig. 18 und 19. Diese brauchen nicht mehr getrennt zu werden und können direkt in der Prothese befestigt werden.

### Zweites Ausführungsbeispiel

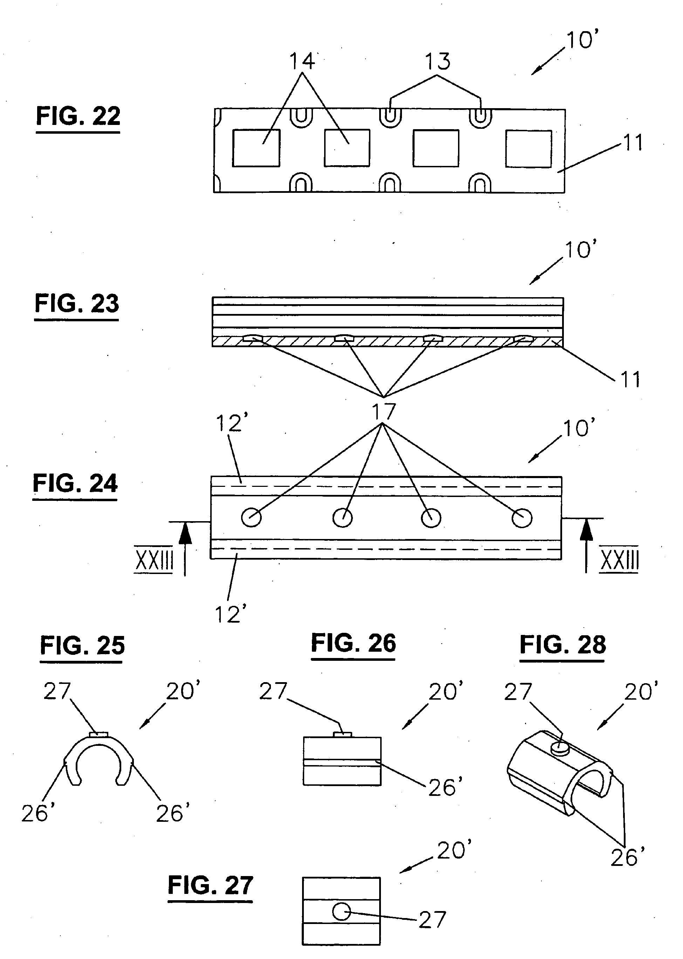

Fig. 20 - 24 zeigen ein zweites Ausführungsbeispiel des Matrizengehäuses 10' und Fig. 25 - 28 den dazu passenden Einsatz 20'. Teile, welche den Teilen des ersten Ausführungsbeispiels entsprechen, sind mit denselben Bezugszeichen versehen.

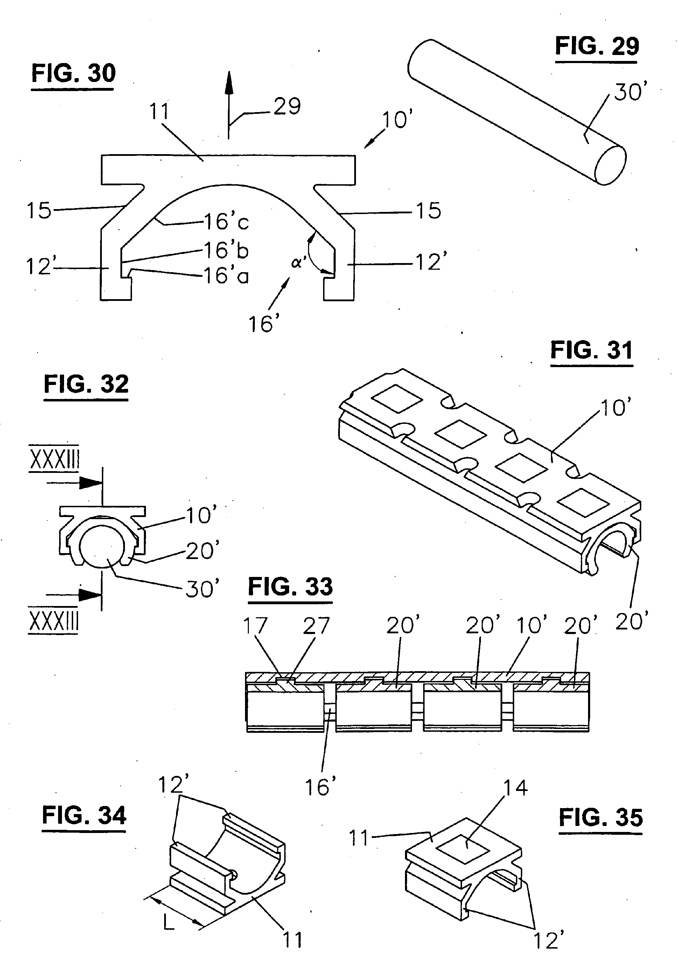

Das zweite Ausführungsbeispiel unterscheidet sich vom ersten Ausführungsbeispiel im Wesentlichen darin, dass das Matrizengehäuse 10' und der Einsatz 20' eine gedrungenere Form haben und die Geometrie des Querschnittes so gewählt ist, dass sie auf eine Patrize in Form eines Rundstegs 30' aufgesetzt werden können, wie er in Fig. 29 gezeigt ist.

Wie beim ersten Ausführungsbeispiel umfasst das Matrizengehäuse 10' eine Reihe von aneinandergefügten Basisgehäusen der Länge L, in welche jeweils ein elastischer Einsatz 20' einsetzbar ist.

Wie insbesondere Fig. 25 zeigt, ist der Einsatz 20' an den beiden Seiten je mit einer Stufe zur Bildung eines Längsflügels 26' sowie auf der okklusalen Seite mit dem Noppen 27 versehen. Die Innenfläche des Einsatzes 20' hat einen im Wesentlichen kreisrunden Querschnitt, wobei die Bogenlänge länger als der halbe Kreisumfang ist.

Wie insbesondere die stark vergrösserte Darstellung in Fig. 30 zeigt, sind die beiden Seitenwände 12' kürzer ausgebildet als die Seitenwände 12 des ersten Matrizengehäuses 10. Die Seitenwände 12' sind jeweils mit einer Längsnut 16' versehen. Der Querschnitt der Längsnut 16' ist aus drei Abschnitten 16'a, 16'b und 16'c gebildet, wobei der erste Abschnitt 16'a im Wesentlichen senkrecht zur Abzugsrichtung 29, der zweite Abschnitt 16'b im Wesentlichen parallel zur Abzugsrichtung 29 und der dritte Abschnitt 16'c unter einem Winkel α' zum zweiten Abschnitt 16'b angeordnet ist, welcher grösser als 90 Grad und kleiner als 180 Grad ist und vorzugsweise im Bereich von 125 Grad bis 170 Grad ist. Die Abschnitte 16'a, 16'b und 16'c sind im Wesentlichen gerade.

Wie beim ersten Ausführungsbeispiel ist durch diese Formgebung der Längsnut 16' gewährleistet, dass das Matrizengehäuse 10' auch grossen Belastungen standhalten vermag.

Wie aus den Fig. 31 - 33 ersichtlich, greifen die Längsflügel 26' des Einsatzes 20' in die jeweilige Längsnut 16' und der Noppen 27 greift in die Vertiefung 17.

Um das Einsetzen des Einsatzes 20' in das Matrizengehäuse 10' zu erleichtern, ist die Distanz zwischen dem Abschnitt 16'a und der Wölbung des Matrizengehäuses 10' etwas grösser gewählt als die entsprechende Abmessung des Einsatzes 20'. Dies führt zu einem Spiel zwischen Matrizengehäuse 10' und Einsatz 20', das jedoch nach dem Aufsetzen der Matrize auf der Stegpatrize 30' aufgrund der Spannung des Einsatzes 20' verschwindet.

Wie Fig. 32 zeigt, umgreift der Einsatz 20' den Steg 30', wobei er über den basalen Rand des Matrizengehäuses 10' hinausragt. Das Matrizengehäuse 10' ist frikativ und retentiv, d.h. kombiniert mittels Reibung und gewählter Geometrie am Steg 30' gehalten.

Die Herstellung, Materialwahl sowie die Einsatzmöglichkeiten des Matrizengehäuses 10' und des Einsatzes 20' sind dieselben wie beim ersten Ausführungsbeispiel.

Wie in den Fig. 34 und 35 gezeigt, kann auch ein einzelnes Matrizengehäuse 10' vorgesehen sein, welches dem Basisgehäuse entspricht und in welches demnach ebenfalls der Einsatz 20' einsetzbar ist.

### Drittes Ausführungsbeispiel

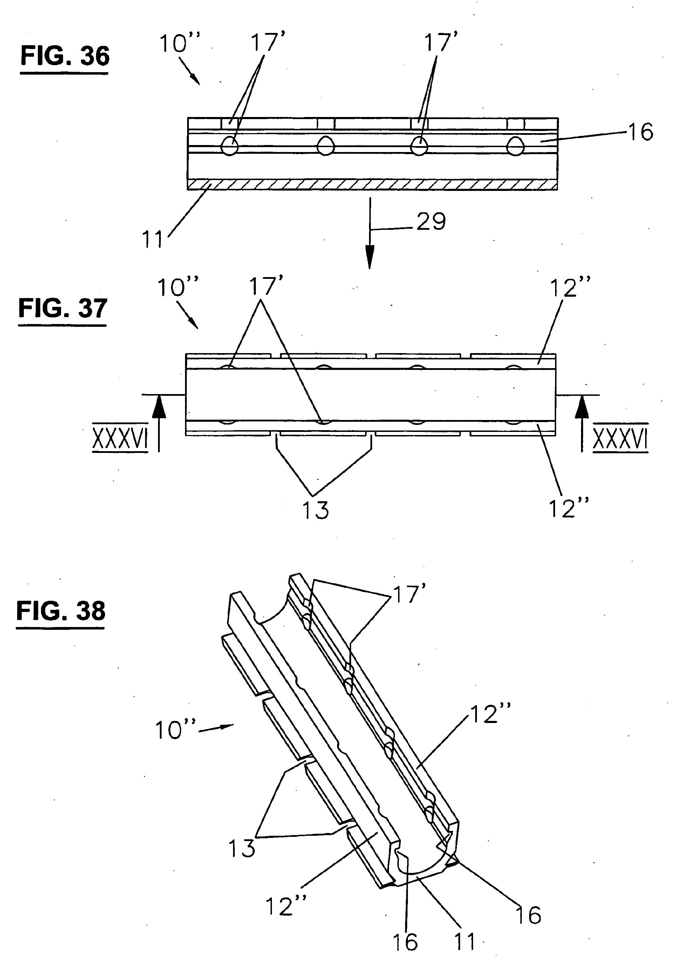

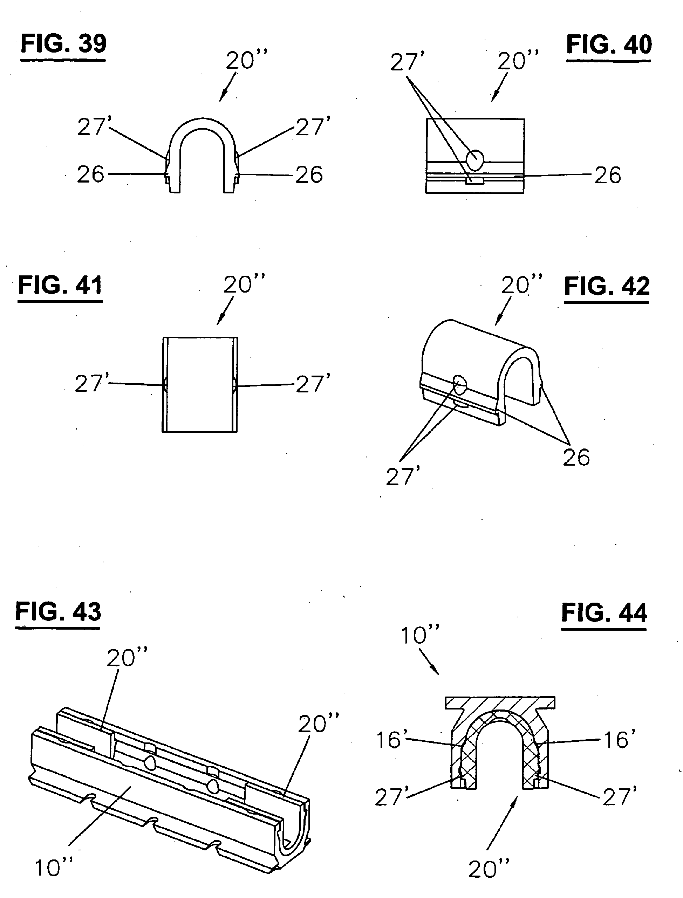

Fig. 36 - 38 zeigen ein drittes Ausführungsbeispiel des Matrizengehäuses 10 " und Fig. 39 - 42 den dazu passenden Einsatz 20 " . Teile, welche den Teilen des ersten Ausführungsbeispiels entsprechen, sind mit denselben Bezugszeichen versehen.

Das dritte Ausführungsbeispiel ist ähnlich wie das erste Ausführungsbeispiel ausgebildet und unterscheidet sich vom diesem im Wesentlichen in der Ausgestaltung der Positionierungsmittel 17', 27'.

Wie in den Fig. 36 - 38 gezeigt, umfasst das Matrizengehäuse 10' ' Vertiefungen 17', die in regelmässigen Abständen an den beiden Seitenwänden 12' 'des Matrizengehäuses 10' ' angebracht sind und im Wesentlichen in Richtung der Abzugsrichtung 29 verlaufen. Die Vertiefungen 17' sind durch Nuten gebildet, welche sich vom basalen Ende des Matrizengehäuses 10' in Richtung der Deckplatte 11 erstrecken. Bei der hier dargestellten Ausführungsform durchqueren die Vertiefungen 17' die Längsnuten 16.

Wie in den Fig. 39 - 42 gezeigt, umfasst der Einsatz 20' ' an den beiden äusseren Längsseiten jeweils einen Vorsprung 27', der sich in Abzugsrichtung erstreckt. Bei der hier dargestellten Ausführungsform durchqueren die Vorsprünge 27' die Längsflügel 26.

Ist der Einsatz 20 " in das Matrizengehäuse 10 " eingesetzt, so greift der jeweilige Vorsprung 27' in eine Vertiefung 17' des Matrizengehäuses 10' ', wie dies in den Fig. 43 und 44 ersichtlich ist.

Das Anbringen der Vertiefungen 17' an den Seitenwänden 12 " des Matrizengehäuses 10 " hat den Vorteil, dass ein Anwender die Vertiefungen 17' gut einsehen und mühelos einen Einsatz 20' ' bei der gewünschten Position des Matrizengehäuses 10' ' einführen kann. Im Weiteren ist der Einsatz 20' ' mittels der Positionierungsmittel 17', 27' sicher in seiner Position im Matrizengehäuse 10 " gehalten.

Wie insbesondere Fig. 44 zeigt, reicht der jeweilige Vorsprung 27' nicht bis zum basalen Ende des Matrizengehäuses 10 " . Es verbleibt somit ein Zwischenraum zwischen Matrizengehäuse 10 " und Einsatz 20 " , der von aussen zugänglich ist. Mittels eines geeigneten Werkzeugs kann in diesen Zwischenraum gegriffen und so der Einsatz 20 " auf einfache Weise aus dem Matrizengehäuse 10 " entnommen werden.

### Viertes Ausführungsbeispiel

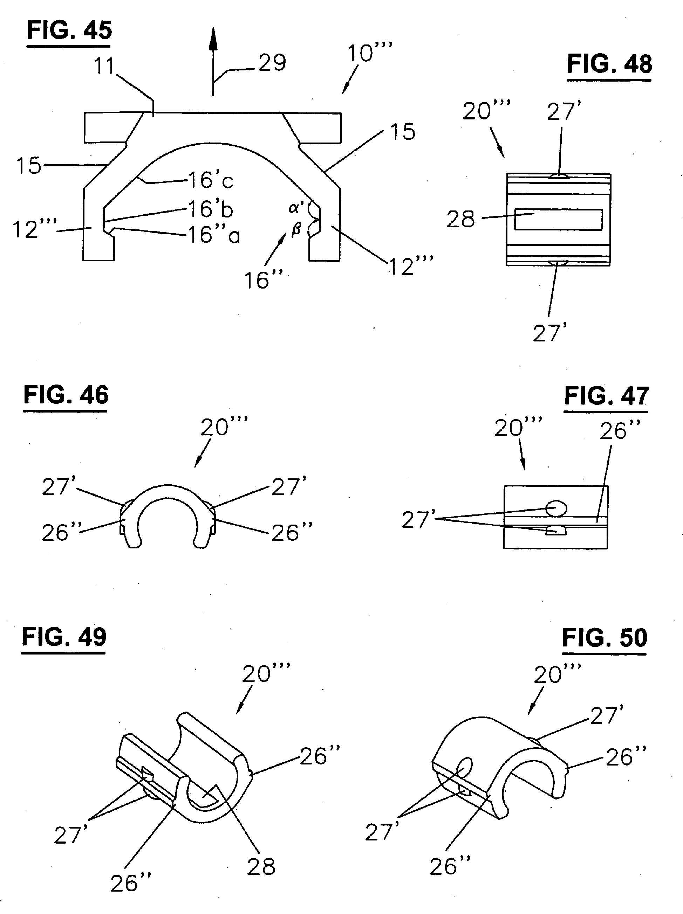

Fig. 45 zeigt ein viertes Ausführungsbeispiel des Matrizengehäuses 10''' und Fig. 46 - 50 den dazu passenden Einsatz 20"'. Teile, welche den Teilen des ersten Ausführungsbeispiels entsprechen, sind mit denselben Bezugszeichen versehen.

Das vierte Ausführungsbeispiel ist ähnlich wie das zweite Ausführungsbeispiel ausgebildet und unterscheidet sich vom diesem im Wesentlichen in der Ausgestaltung der Längsnuten 16' ', der Längsflügel 26' ' und der Positionierungsmittel 17', 27'.

Wie aus der Fig. 45 ersichtlich, umfasst der Querschnitt der Längsnut 16' drei Abschnitte 16''a, 16'b und 16'c. Im Unterschied zum zweiten Ausführungsbeispiel ist der erste Abschnitt 16''a etwas geneigt und nicht senkrecht zur Abzugsrichtung 29 angeordnet. Die Abschnitte 16"a und 16'b sind somit unter einem Winkel β angeordnet, welcher grösser als 90 Grad und kleiner als 180 Grad ist und vorzugsweise im Bereich von 110 Grad bis 160 Grad liegt, z.B. bei 120 Grad.

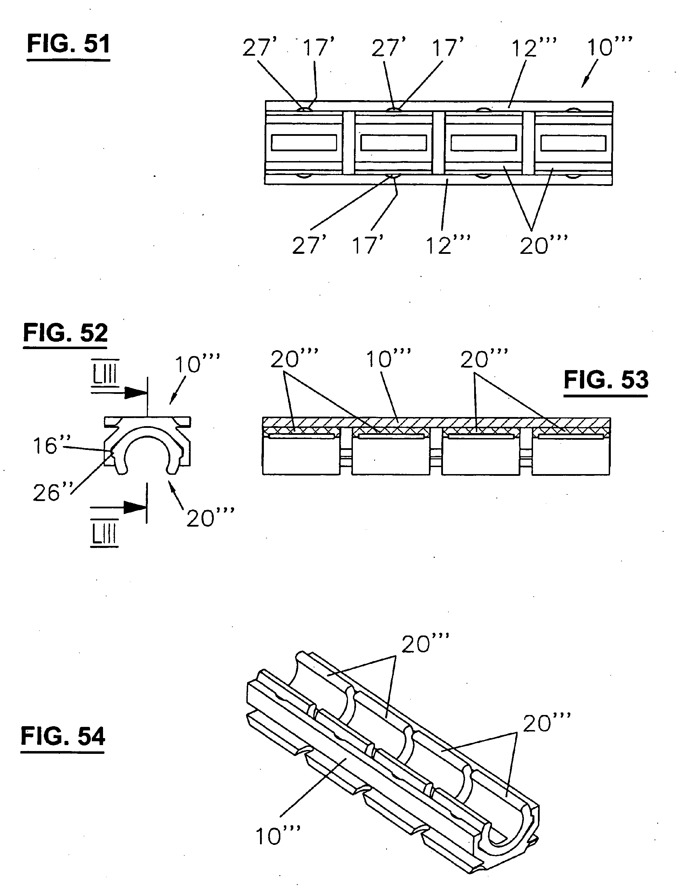

Wie Fig. 46 zeigt, weist der jeweilige Längsflügel 26' ' des Einsatzes 20' ' ' eine abgeschrägte Unterseite auf. Diese liegt auf dem Abschnitt 16"a auf, wenn der Einsatz 20' ' ' im Matrizengehäuse 10' ' ' eingesetzt ist (vgl. Fig. 52). Durch die schräge Anordnung des Abschnitts 16"a sowie des Längsflügels 26' ' ist ein Einführen des Einsatzes 20' ' ' in das Matrizengehäuse 10' ' ' erleichtert.

Wie in den Fig. 46 - 50 gezeigt, ist der Einsatz 20' ' ' an den beiden äusseren Längsseiten jeweils mit einem Vorsprung 27' versehen, welcher von der beim dritten Ausführungsbeispiel beschriebenen Art ist.

Der Einsatz 20''' ist innen mit einer Ausnehmung 28 versehen. Ist zum Einführen des Einsatzes 20''' in das Matrizengehäuse 10''' ein Hilfsinstrument vorgesehen, so kann der Einsatz 20''' mittels der Ausnehmung 28 präzise am Hilfsinstrument aufgenommen werden.

Damit der Einsatz 20' ' ' an der gewünschten Position des Matrizengehäuses 10' ' ' eingefügt werden kann und dort gehalten wird, ist dieses an den beiden Seitenwänden 12' ' ' derart mit Vertiefungen 17' versehen, wie sie beim dritten Ausführungsbeispiel beschrieben sind. In den Fig. 51 - 54 ist ein Beispiel mit einem Matrizengehäuse 10''' gezeigt, in welches vier Einsätze 10''' eingesetzt sind. Wie ersichtlich, greifen die jeweiligen Vorsprünge 27' und Längsflügel 26 " in die Vertiefung 17' bzw. Längsnut 16'.

Die soweit dargestellten Ausführungsbeispiele haben u.a. folgende Vorteile:
- Die Halte- bzw. Abzugskraft kann auf vielfältige Weise eingestellt werden, indem das Basisgehäuse je nach Wahl mit einem Einsatz besetzt wird oder unbesetzt bleibt.
- In jedes Basisgehäuse des Matrizengehäuse kann derselbe Einsatz eingefügt werden. Wird das Matrizengehäuse gekürzt, so kann nach wie vor, derselbe Einsatz ohne jegliche Änderung verwendet werden.
- Das Matrizengehäuse kann maschinell vorfabriziert werden, sodass eine Zahnprothese auf relativ einfache und kostengünstige Weise mit Mitteln zur Befestigung an einer Stegpatrize versehbar ist. Das Matrizengehäuse ist durch Kürzen auf einfache Weise an die gegebenen Geometrien anpassbar.
- Durch Vorsehen von Einschnitten am Matrizengehäuse können auf einfache Weise Mittel bereitgestellt werden, welche Positionen zum Kürzen des Matrizengehäuses mittels einer Trennscheibe definieren und welche beim Trennvorgang zum Führen der Trennscheibe dienen.

Die Massnahme, den Einsatz 20, 20', 20' ', 20' ' ' mit mindestens einem Vorsprung 27, 27' zu versehen, um ihn in einem Matrizengehäuse 10, 10', 10 ", 10 " ' positionieren und gegen eine Längsverschiebung sichern zu können, ist auch bei anderen Matrizengehäusen einsetzbar, z.B. bei solchen, die vom Zahntechniker durch Guss hergestellt werden. Zu diesem Zweck kann direkt ein Einsatz 20, 20', 20' ' , 20' ' ' auf den Steg 30, 30' aufgesetzt werden, um davon ein Duplikat herzustellen. Auf diesem Duplikat wird die Wachsmodellation für den Modellguss vorgenommen. Der gegossene Modellguss bzw. das gegossene Matrizengehäuse weist dann eine Vertiefung 17, 17' auf, in welche der Vorsprung 27, 27' des eingesetzten Einsatzes 20, 20', 20' ', 20' ' ' greift und somit dieser genau positioniert und gegen ein Verschieben gesichert ist.

Die Geometrie des Querschnittes von Matrizengehäuse 10, 10', 10' ', 10' ' ' und Einsatz 20, 20', 20' ', 20' ' ' kann auf alle bekannten Stegpatrizen angepasst sein, z.B. Stege mit einem Querschnitt, der parallelwandig, rund, oval, eiförmig, etc. ist. Entsprechend bilden das Matrizengehäuse zusammen mit dem Steg ein Steggelenk, bei welchem sich das Matrizengehäuse um die Stegachse drehen kann, oder ein Steggeschiebe, bei welchem das Matrizengehäuse starr mit dem Steg verbunden ist.

Der Haltemechanismus mittels Längsnut 16, 16' und Längsflügel 26, 26', 26 ' 'kann natürlich auch so erzeugt werden, indem das Matrizengehäuse 10, 10', 10' ' , 10' ' ' mit Längsflügeln 26, 26', 26' ' und der Einsatz 20, 20', 20' ', 20' ' ' mit Längsnuten 16, 16', 16' 'versehen ist. Entsprechend können die Positionierungsmittel 17, 27 bzw. 17', 27' komplementär ausgebildet sein, indem das Matrizengehäuse 10, 10', 10 ", 10''' in im Wesentlichen regelmässigen Abständen mit einem Vorsprung versehen ist, der in eine Vertiefung im jeweiligen Einsatz 20, 20', 20 ", 20''' greifen kann.

## Patentansprüche

1. Anordnung zur Befestigung einer Zahnprothese an einer Stegpatrize, mit
einem Matrizengehäuse, welches mit der Zahnprothese verbindbar ist, wobei die Anordnung
zum Einstellen der Haltekraft, mit welcher das Matrizengehäuse an der Stegpatrize gehalten ist, mindestens zwei Einsätze (20; 20'; 20''; 20''') umfasst, welche in das Matrizengehäuse (10; 10'; 10''; 10''') einsetzbar sind und welche sich jeweils über die okklusale Seite der Stegpatrize (30; 30') erstrecken und so diese umgreifen, wenn das Matrizengehäuse an der stegpatrize angebracht ist.

2. Anordnung nach Anspruch 1, wobei das Matrizengehäuse (10; 10'; 10''; 10''') einteilig ausgebildet ist und eine Anzahl von aneinandergefügten, im Wesentlichen gleichen Basisgehäusen umfasst, wobei die Einsätze (20; 20'; 20''; 20''') in jedes Basisgehäuse einsetzbar sind.

3. Anordnung nach einem der vorangehenden Ansprüche, wobei das Matrizengehäuse (10; 10'; 10''; 10''') und die Einsätze (20; 20'; 20''; 20''') Positionierungsmittel (17, 27; 17', 27') umfassen, welche die Position der Einsätze im Matrizengehäuse vorgeben, wobei vorzugsweise die Positionierungsmittel (17; 17') des Matrizengehäuses in im Wesentlichen regelmässigen Abständen am Matrizengehäuse angebracht sind.

4. Anordnung nach Anspruch 3, wobei die Positionierungsmittel Vertiefungen (17; 17') und Vorsprünge (27; 27') umfassen, wobei nach Einsetzen eines jeweiligen Einsatzes (20; 20'; 20''; 20''') in das Matrizengehäuse (10; 10'; 10''; 10''') mindestens ein Vorsprung (27; 27') in eine Vertiefung (17; 17') greift.

5. Anordnung nach Anspruch 3 oder 4, wobei die Länge der Einsätze (20; 20'; 20''; 20''') so gewählt ist, dass ein Zwischenraum (s) zwischen den beiden Einsätzen besteht, wenn sie in zwei benachbarten Positionen des Matrizengehäuses (10; 10'; 10''; 10''') eingesetzt sind.

6. Anordnung nach einem der vorangehenden Ansprüche, wobei das Matrizengehäuse (10; 10'; 10''; 10''') Kennzeichnungen (13, 14) aufweist, welche in im Wesentlichen regelmässigen Abständen angebracht sind.

7. Anordnung nach Anspruch 6, wobei die Kennzeichnungen Einschnitte (13), Nuten und/oder Gravuren (14) sind.

8. Anordnung nach einem der vorangehenden Ansprüche, wobei das Matrizengehäuse (10; 10'; 10''; 10''') Einschnitte (13) umfasst, welche Positionen zum Kürzen des Matrizengehäuses (10; 10'; 10''; 10''') mittels einer Trennscheibe (35) definieren und beim Trennvorgang zum Führen der Trennscheibe dienen.

9. Anordnung nach einem der vorangehenden Ansprüche, wobei die Einsätze (20; 20'; 20''; 20''') und/oder das Matrizengehäuse (10; 10'; 10''; 10''') Kunststoff enthalten oder aus Kunststoff bestehen, wobei der Kunststoff vorzugsweise Polyetheretherketon (PEEK) oder Polyoxymethylen (POM) ist.

10. Anordnung nach einem der vorangehenden Ansprüche, wobei das Matrizengehäuse (10; 10'; 10''; 10''') mindestens zwei Längsnuten (16; 16'; 16") und der jeweilige Einsatz (20; 20'; 20''; 20''') Längsflügel (26; 26'; 26'') aufweisen, welche in die Längsnuten eingreifen.

11. Anordnung nach Anspruch 10, wobei das an der Stegpatrize (30; 30') angebrachte Matrizengehäuse (10; 10'; 10''; 10''') in Abzugsrichtung (33) entfernbar ist,
wobei der Querschnitt der jeweiligen Längsnut (16; 16'; 16'')
einen ersten Abschnitt (16a; 16'a; 16''a) umfasst, der an
einen zweiten Abschnitt (16b; 16'b) angrenzt, der näher zur okklusalen Seite (11) des Matrizengehäuses als der erste Abschnitt und im Wesentlichen parallel zur Abzugsrichtung angeordnet ist, wobei der zweite Abschnitt an
einen dritten Abschnitt (16c; 16'c) angrenzt,
wobei der Winkel (α, α') zwischen dem zweiten und dritten Abschnitt zwischen 90 Grad und 180 Grad, vorzugsweise im Bereich von 125 Grad bis 170 Grad ist.

12. Anordnung nach einem der vorangehenden Ansprüche, wobei sie zum Giessen des Matrizengehäuses (10; 10'; 10''; 10''') und/oder Kürzen desselben ein Hilfsteil umfasst, welches im Wesentlichen der Form des Einsatzes (20; 20'; 20''; 20''') entspricht und im Wesentlichen dieselbe Grösse oder eine überdimensionierte Grösse hat.

## Claims

1. Arrangement for fastening a dental prosthesis to a male bar, comprising
a female housing that is connectable to the dental prosthesis, the arrangement
including, in order to adjust the retention force retaining the female housing on the male bar, at least two inserts (20; 20'; 20''; 20''') that are insertable into the female housing (10; 10'; 10''; 10''') and each extend over the occlusal side of the male bar (30; 30') and thus enclose the latter when the female housing is attached to the male bar.

2. Arrangement according to claim 1, wherein the female housing (10; 10'; 10''; 10''') is made in one piece and comprises a number of adjoining, substantially identical basic housing elements, the inserts (20; 20'; 20"; 20''') being insertable into every basic housing element.

3. Arrangement according to one of the preceding claims, wherein the female housing (10; 10'; 10''; 10''') and the inserts (20; 20'; 20''; 20''') comprise positioning means (17, 27; 17', 27') which determine the position of the inserts inside the female housing, the positioning means (17; 17') of the female housing preferably being arranged on the female housing at substantially regular intervals.

4. Arrangement according to claim 3, wherein the positioning means include recesses (17; 17') and projections (27; 27'), at least one projection (27; 27') engaging in a recess (17; 17') when a respective insert (20; 20'; 20"; 20''') has been inserted into the female housing (10; 10'; 10''; 10''').

5. Arrangement according to claim 3 or 4, wherein the length of the inserts (20; 20'; 20''; 20''') is chosen such that a space (s) is formed between the two inserts when they are inserted in two neighbouring positions of the female housing (10; 10'; 10"; 10''').

6. Arrangement according to any one of the preceding claims, wherein the female housing (10; 10'; 10''; 10''') is provided with marks (13, 14) that are arranged at substantially regular intervals.

7. Arrangement according to claim 6, wherein the marks are incisions (13), grooves, and/or engravings (14).

8. Arrangement according to any one of the preceding claims, wherein the female housing (10; 10'; 10''; 10''') has incisions (13) which define positions for shortening the female housing (10; 10'; 10''; 10''') by means of a cut-off wheel (35) and serve for guiding the cut-off wheel during the cutting operation.

9. Arrangement according to any one of the preceding claims, wherein the inserts (20; 20'; 20"; 20''') and/or the female housing (10; 10'; 10''; 10''') include or consist of a synthetic material, the synthetic material preferably being polyetheretherketone (PEEK) or polyoxymethylene (POM).

10. Arrangement according to any one of the preceding claims, wherein the female housing (10; 10'; 10''; 10''') has at least two longitudinal grooves (16; 16'; 16'') and each insert (20; 20'; 20"; 20''') has longitudinal wings (26; 26'; 26'') which engage in the longitudinal grooves.

11. Arrangement according to claim 10, wherein the female housing (10; 10'; 10''; 10''') attached to the male bar (30; 30') is removable in a withdrawal direction (33),
the cross-section of each longitudinal groove (16; 16'; 16'')
comprising a first section (16a; 16'a, 16''a)
adjoining to a second section (16b; 16'b) that is closer to the occlusal side (11) of the female housing than the first section and is substantially parallel to the withdrawal direction, the second section
adjoining to a third section (16c; 16'c),
the angle (α, α') between the second and the third sections being comprised between 90 degrees and 180 degrees, preferably in the range of 125 degrees to 170 degrees.

12. Arrangement according to any one of the preceding claims, wherein it comprises an auxiliary part for casting the female housing (10; 10'; 10''; 10''') and/or shortening the latter which essentially corresponds to the shape of the insert (20; 20'; 20"; 20" ') and has essentially the same size or an overdimensioned size.

## Revendications

1. Agencement pour la fixation d'une prothèse dentaire à une barre mâle, comprenant
un boîtier de partie femelle pouvant être relié à la prothèse dentaire, l'agencement
comprenant, pour ajuster la force de rétention avec laquelle le boîtier de partie femelle est retenu sur la barre mâle, au moins deux insertions (20; 20'; 20''; 20''') insérables dans le boîtier de partie femelle (10; 10'; 10''; 10''') qui s'étendent chacune sur le côté occlusal de la barre mâle (30; 30') et l'entourent ainsi lorsque le boîtier de partie femelle est attaché à la barre mâle.

2. Agencement selon la revendication 1, où le boîtier de partie femelle (10; 10'; 10''; 10''') est formé d'une seule pièce et comprend un nombre de boîtiers de base juxtaposés essentiellement identiques, les insertions (20; 20'; 20''; 20''') étant chacune insérables dans l'un des boîtiers de base.

3. Agencement selon l'une des revendications précédentes, où le boîtier de partie femelle (10; 10'; 10''; 10''') et les insertions (20; 20'; 20"; 20''') présentent des moyens de positionnement (17, 27; 17', 27') qui déterminent la position des insertions dans le boîtier de partie femelle, les moyens de positionnement (17; 17') du boîtier de partie femelle étant préférablement pourvus sur le boîtier de partie femelle à des intervalles essentiellement réguliers.

4. Agencement selon la revendication 3, où les moyens de positionnement comprennent des évidements (17; 17') et des saillies (27; 27'), au moins une saillie (27; 27') s'engageant dans un évidement (17; 17') lorsqu'une insertion (20; 20'; 20''; 20''') est insérée dans le boîtier de partie femelle (10; 10'; 10"; 10''').

5. Agencement selon la revendication 3 ou 4, où la longueur des insertions (20; 20'; 20''; 20''') est choisie telle qu'un écart (s) résulte entre les deux insertions lorsqu'elles sont insérées en deux positions voisines dans le boîtier de partie femelle (10; 10'; 10''; 10''').

6. Agencement selon l'une des revendications précédentes, où le boîtier de partie femelle (10; 10'; 10''; 10''') présente des marquages (13, 14) qui sont pourvus à des intervalles essentiellement réguliers.

7. Agencement selon la revendication 6, où les marquages sont des incisions (13), rainures et/ou gravures (14).

8. Agencement selon l'une des revendications précédentes, où le boîtier de partie femelle (10; 10'; 10''; 10''') présente des incisions (13) qui définissent des positions de raccourcissement du boîtier de partie femelle (10; 10'; 10''; 10''') au moyen d'un disque à tronçonner (35) et servent au guidage du disque à tronçonner pendant l'opération de tronçonnage.

9. Agencement selon l'une des revendications précédentes, où les insertions (20; 20'; 20''; 20''') et/ou le boîtier de partie femelle (10; 10'; 10''; 10''') contiennent ou sont constitués d'un matériau synthétique, le matériau synthétique étant préférablement le polyétheréthercétone (PEEK) ou le polyoxyméthylène (POM).

10. Agencement selon l'une des revendications précédentes, où le boîtier de partie femelle (10; 10'; 10'' ; 10''') présente au moins deux rainures longitudinales (16; 16' ; 16'') et chaque insertion (20; 20' ; 20'' ; 20''') des ailes longitudinales (26; 26' ; 26") s'engageant dans les rainures longitudinales.

11. Agencement selon la revendication 10, où le boîtier de partie femelle (10; 10'; 10''; 10''') fixé à la barre mâle (30; 30') est amovible dans une direction d'enlèvement (33), la coupe transversale de chaque rainure longitudinale (16; 16'; 16'') comprenant
une première section (16a; 16'a; 16''a) attenante à
une deuxième section (16b; 16'b) laquelle est plus proche du côté occlusal (11) du boîtier de partie femelle que la première section et est agencée essentiellement parallèlement à la direction d'enlèvement, la deuxième section étant attenante à
une troisième section (16c; 16'c),
l'angle (α, α') entre la deuxième et la troisième section étant entre 90 degrés et 180 degrés, préférablement dans la plage de 125 degrés à 170 degrés.

12. Agencement selon l'une des revendications précédentes, où il comprend, pour mouler le boîtier de partie femelle (10; 10'; 10''; 10''') et/ou pour raccourcir ce dernier, un élément auxiliaire lequel correspond essentiellement à la forme de la insertion (20; 20'; 20''; 20''') et présente essentiellement la même taille ou une taille surdimensionnée.
